(19) **Europäisches Patentamt European Patent Office Office européen des brevets**

(11) **EP 3 447 781 B1**

(12) **EUROPEAN PATENT SPECIFICATION**

(45) Date of publication and mention
of the grant of the patent:
**06.07.2022 Bulletin 2022/27**

(21) Application number: **17786074.9**

(22) Date of filing: **09.02.2017**

(51) International Patent Classification (IPC):
*H01G 11/76* (2013.01)    *H01G 11/74* (2013.01)
*H01G 11/70* (2013.01)    *H01G 11/78* (2013.01)
*H01G 11/10* (2013.01)

(52) Cooperative Patent Classification (CPC):
**H01G 11/10; H01G 11/70; H01G 11/74;**
**H01G 11/76; H01G 11/78;** H01G 11/24;
H01G 11/26; H01G 11/32; H01G 11/34; Y02E 60/13

(86) International application number:
**PCT/KR2017/001404**

(87) International publication number:
**WO 2017/183805 (26.10.2017 Gazette 2017/43)**

(54) **LOW-RESISTANCE ULTRA CAPACITOR**

NIEDEROHMIGER ULTRA-KONDENSATOR

SUPERCONDENSATEUR À FAIBLE RÉSISTANCE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.04.2016 KR 20160048640**
           **02.02.2017 KR 20170014924**

(43) Date of publication of application:
**27.02.2019 Bulletin 2019/09**

(73) Proprietor: **LS Materials Co., Ltd.**
**Anyang-si, Gyeonggi-do 14118 (KR)**

(72) Inventors:
• **BAE, Sang Hyun**
**Anyang-si**
**Gyeonggi-do 14119 (KR)**

• **LEE, Ha Young**
**Anyang-si**
**Gyeonggi-do 14119 (KR)**

(74) Representative: **Botti, Mario et al**
**Botti & Ferrari S.p.A.**
**Via Cappellini, 11**
**20124 Milano (IT)**

(56) References cited:
**EP-A1- 2 736 057    EP-A1- 2 998 973**
**JP-A- 2008 091 585    JP-A- 2014 072 348**
**KR-A- 20110 090 351    KR-A- 20120 103 991**
**KR-A- 20130 116 466    KR-A- 20150 130 905**
**US-A1- 2009 109 600    US-A1- 2015 243 453**

## Description

[Technical Field]

The present invention relates to an energy storage device, and more particularly, to an ultra capacitor.

[Background Art]

Ultra capacitors, also called super capacitors, are energy storage devices having intermediate characteristics between electrolytic capacitors and secondary batteries. Ultra capacitors have high efficiency and semi-permanent lifetime characteristics, so a market has been formed for an energy storage device that compensates for short cycle and instantaneous high voltage problems which are weak points of the secondary batteries.

Since ultra capacitors have fast charging and discharging characteristics, the ultra capacitors may be used not only as an auxiliary power source for mobile devices such as mobile phones, tablet PCs, or notebook computers, but also as a main power source or an auxiliary power source for electric vehicles or hybrid vehicles that require high capacity, power supply devices for solar cells, uninterruptible power supplies (UPSs), or the like.

Typical ultra capacitors are configured in a form in which an aluminum current collector coated with activated carbon and a separator are wound in a circular shape and embedded in an aluminum case.

Since the voltage of one ultra capacitor is only 3V or less, in a case in which an ultra capacitor is used for a high voltage application, an ultra capacitor module configured by connecting a plurality of ultra capacitors in series is used.

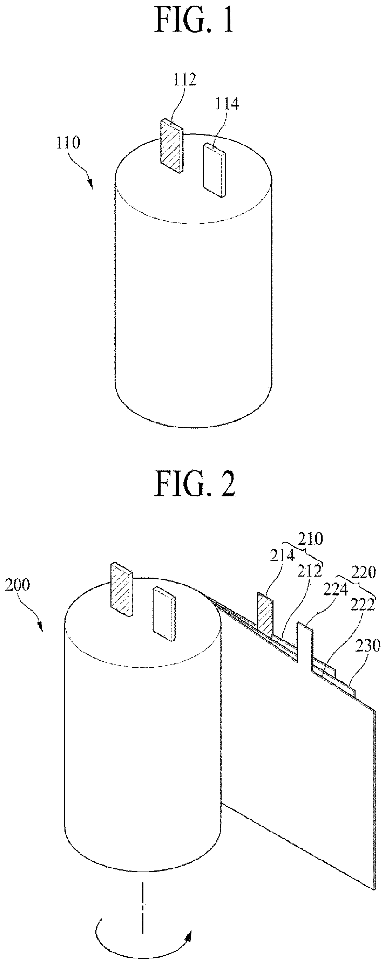

The configuration of a typical ultra capacitor is shown in FIG. 1. As shown in FIG. 1, the typical ultra capacitor includes a bare cell 110 disposed in a cylindrical type case (not shown). The bare cell 110 is formed by winding a positive electrode (not shown), a negative electrode (not shown), and a separator (not shown) for electrically separating the positive electrode and the negative electrode. The positive electrode includes a positive electrode plate (not shown) and a positive electrode lead tab 112, and the negative electrode includes a negative electrode plate (not shown) and a negative electrode lead tab 114.

As shown in FIG. 1, in an ultra capacitor according to the related art, the positive electrode lead tab 112 and the negative electrode lead tab 114 are respectively connected to the positive electrode plate and the negative electrode plate and led in a specific direction to constitute the positive electrode and the negative electrode, and the positive and negative lead tabs 112 and 114 are connected to an external load.

However, in the case of the ultra capacitor 100 according to the related art, since the relationship between the gaps between the lead tabs and the number of the lead tabs with respect to the length of the electrode plates is not considered, there is a problem in that low-resistance is difficult to realize and therefore resistance increases.

In order to solve the problem, a method of increasing the number of the positive electrode lead tabs 112 and the number of the negative electrode lead tabs 114 to secure a flow path of a current may be considered, but when merely increasing the number of the positive electrode lead tabs 112 and the number of the negative electrode lead tabs 114, mutual interference may occur between the lead tabs 112 and 114 so that resistance characteristics may not be improved.

In Document 1 (EP 2 736 057 A1), it discloses an electric double-layer capacitor capable of reducing an internal resistance without exerting a large stress on a positive electrode body, a negative electrode body, and separators, which is obtained by housing a capacitor element impregnated with an electrolytic solution in a case, and wherein the capacitor element is obtained by stacking and winding a positive electrode body, separators, and a positive electrode body.

In Document 2 (JP 2008 091585 A), it discloses a method of manufacturing an electric double layer capacitor in which two or more electrode tabs can be certainly pulled out from desired points on the winding end surface of a capacitor element, comprising a first process of detecting the thickness of an electrode sheet equipped with a polarizable electrode on both or either side of a metal current collector, a second process of calculating the connecting positions of the tabs on the basis of a calculated value, a third process of connecting the tabs at the calculated connecting positions, and a fourth process of rolling up the electrode sheet to which the tabs are connected to form a capacitor element making the electrode tabs of the same polarity overlap with each other.

[Disclosure]

[Technical Problem]

The present invention is directed to providing an ultra capacitor capable of realizing low-resistance as defined in claim 1. Embodiments of the invention are defined in the dependent claims.

[Technical Solution]

One aspect of the present invention provides a low-resistance ultra capacitor including a bare cell 200 which includes: a first electrode 210 including a first electrode plate 212 having a first polarity and a plurality of first electrode lead tabs 214 connected to the first electrode plate 212; a second electrode 220 including a second electrode plate 222 having a second polarity opposite to the first polarity and a plurality of second electrode lead tabs 224 connected to the second electrode plate 222; and at least one separator 230 disposed between the first electrode 210 and the second electrode 220 to electrically insulate the first electrode 210 and the second electrode 220. The bare cell 200 is formed by winding the first electrode 210, the separator 230, and the second electrode 220 so that the plurality of first electrode lead tabs 214 overlap each other and the plurality of second electrode lead tabs 224 overlap each other, and length of the first electrode plate, the number of the first electrode lead tabs, and gap between the first electrode lead tabs or length of the second electrode plate, the number of the second electrode lead tabs, and gap between the second electrode lead tabs are determined according to an equation below.

$$0.8 \leq \frac{W \times Q_{LT}}{L} < 1$$

In the above equation, W denotes the gap between the first electrode lead tabs or the second electrode lead tabs, $Q_{LT}$ denotes the number of the first electrode lead tabs or the second electrode lead tabs, and L denotes the length of the first electrode plate or the second electrode plate.

The low-resistance ultra capacitor comprises a first bare cell 720 and a second bare cell 730 as the bare cell 200. The low-resistance ultra capacitor further comprises a housing 710 having a configuration in which one surface is closed and the other surface is opened and having a first accommodation hole 712 for accommodating the first bare cell 720 and a second accommodation hole 714 for accommodating the second bare cell 730, an electrolyte immersed in the housing 710, and a cover 740 configured to cover the other surface of the housing 710. A first groove 742 for exposing a plurality of first electrode lead tabs 722 overlapping each other of the first bare cell 720, a second groove 744 for exposing a plurality of second electrode lead tabs 724 overlapping each other of the first bare cell 720, a third groove 746 for exposing a plurality of first electrode lead tabs 732 overlapping each other of the second bare cell 730, and a fourth groove 748 for exposing a plurality of second electrode lead tabs 734 overlapping each other of the second bare cell 730 are formed in the cover 740. The plurality of first electrode lead tabs 722 of the first bare cell 720 are exposed to the outside through the first groove 742 and connected to a first terminal of an external load, the plurality of second electrode lead tabs 724 of the first bare cell 720 which are exposed through the second groove 744 and the plurality of first electrode lead tabs 732 of the second bare cell 730 which are exposed through the third groove 746 are electrically connected to each other, and the plurality of second electrode lead tabs 734 of the second bare cell 730 are exposed to the outside through the fourth groove 748 and connected to a second terminal of the external load.

Each of the first electrode plate 212 and the second electrode plate 222 may include a current collector 212a and an active layer 212b formed on the current collector 212a, and the current collector 212a and the active layer 212b are formed so as to satisfy an equation below.

$$4 \leq \frac{T_{ac}}{T_{cc}} \leq 9.7$$

In the above equation, Tac denotes a thickness of the active layer 212b, and $T_{cc}$ denotes a thickness of the current collector 212a.

The thickness of the current collector 212a may be in a range of 22 μm to 52 μm and the thickness of the active layer 212b may be 210 μm or less.

The active layer may include activated carbon, and a ratio of the sum of mesoporous and macroporous specific surface areas to the total specific surface area in pores of the activated carbon may be in a range of 1.5% to 2.5%.

The plurality second electrode lead tabs 724 of the first bare cell 720 and the plurality of first electrode lead tabs 732 of the second bare cell 730 are bent so that at least some of the plurality second electrode lead tabs 724 and the plurality of first electrode lead tabs 732 overlap each other.

[Advantageous Effects]

According to the present invention, a flow path of current can be ensured and mutual interference between electrode lead tabs can be alleviated by adjusting the length of an electrode plate, the number of the electrode lead tabs, and the gap between the electrode lead tabs, thereby decreasing resistance of an ultra capacitor.

Further, according to the present invention, the ultra capacitor has low-resistance so that heat generation can be minimized and energy efficiency of the ultra capacitor can be improved.

[Description of Drawings]

FIG. 1 is an exploded perspective view illustrating a configuration of an ultra capacitor according to the related art.
FIG. 2 is a view illustrating a configuration of a bare cell according to one embodiment of the present invention.
FIG. 3A is a view illustrating a configuration of a first electrode plate shown in FIG. 2.
FIG. 3B is a view illustrating that the first electrode plate and first electrode lead tabs are connected to each other.

FIG. 4 is a graph illustrating a change in relative resistance according to a change in a thickness ratio of a current collector and an active layer.

FIG. 5 is a table illustrating a change in relative resistance according to the length of an electrode plate, the number of electrode lead tabs, and the gap between the electrode lead tabs.

FIG. 6 is a view illustrating a configuration of a low-resistance ultra capacitor including the bare cell shown in FIG. 2.

FIG. 7 is a perspective view of an ultra capacitor module connected without a bus bar coupling.

FIG. 8 is an exploded perspective view of the ultra capacitor module connected without a bus bar coupling.

[Modes of the Invention]

The terms used in this specification should be understood as follows.

The singular forms include plural forms unless the context clearly defines otherwise. Terms "first," "second," and the like are used to distinguish one component from other components, and components are not limited by these terms.

It should be understood that the terms such as "including," "having," and "comprising" are not intended to preclude the possibility that one more other features, numbers, steps, actions, components, parts, or combinations thereof may be present or added.

When the term "at least one" is used, it should be understood to include all possible combinations of one or more of the associated listed items. For example, the meaning of "at least one of a first item, a second item, and a third item" means a combination of all items that can be presented from two or more of the first item, the second item and the third item as well as each of the first item, the second item or the third item.

Hereinafter, embodiments of the present invention will be described in detail with reference to the accompanying drawings.

FIG. 2 is a view illustrating a configuration of a bare cell according to one embodiment of the present invention. A bare cell 200 shown in FIG. 2 is called an electrode element and is formed by winding a first electrode 210, a second electrode 220 having a polarity opposite to that of the first electrode 210, and a separator 230 for electrically separating the first electrode 210 and the second electrode 220.

The bare cell 200 is formed by winding in a circular shape, an elliptical shape, or a prismatic shape.

In one embodiment, when the first electrode 210 is a positive electrode (+), the second electrode 220 becomes a negative electrode (-), and when the first electrode 210 is a negative electrode (-), the second electrode 220 becomes a positive electrode (+).

Although the separator 230 is illustrated as being interposed only between the first electrode 210 and the second electrode 220 for the convenience of explanation in FIG. 2, the separator 230 may be additionally disposed outside the first electrode 210 and the second electrode 220 to prevent the first electrode 210 or the second electrode 220 from being exposed to the outside.

That is, the bare cell 200 may be stacked and wound in the order of the separator 230, the first electrode 210, the separator 230, the second electrode 220 and the separator 230, or in the order of the separator 230, the second electrode 220, the separator 230, the first electrode 210, and the separator 230.

The first electrode 210 includes a first electrode plate 212 and a plurality of first electrode lead tabs 214, and the second electrode 220 includes a second electrode plate 222 and a plurality of second electrode lead tabs 224.

According to the invention, the bare cell 200 is formed by winding the first electrode 210, the separator 230, and the second electrode 220 so that the plurality of first electrode lead tabs 214 constituting the first electrode 210 overlap each other and the plurality of second electrode lead tabs 224 constituting the second electrode 220 overlap each other.

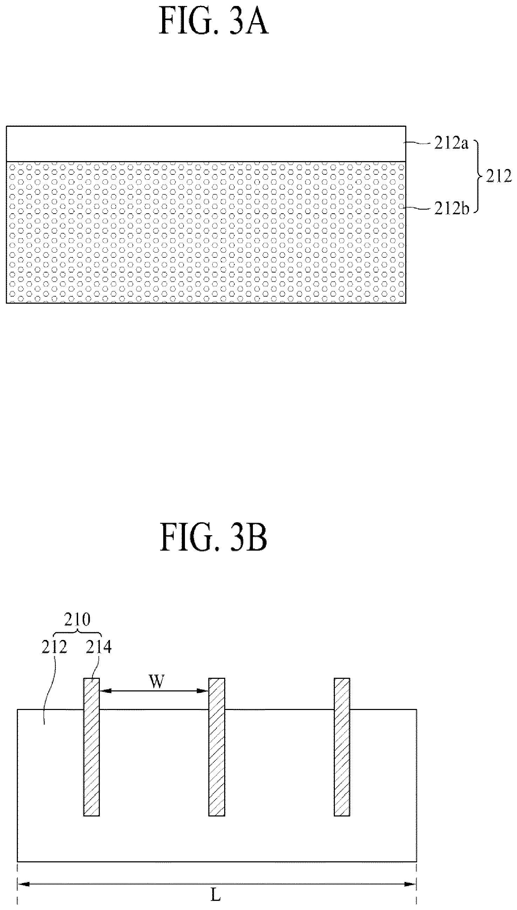

Since the first electrode plate 212 and the second electrode plate 222 have the same configuration and the first electrode lead tabs 214 and the second electrode lead tabs 224 have the same configuration, in FIG. 3 below, the configuration will be described with reference to the first electrode plate 212 and the first electrode lead tab 214 for the convenience of explanation, and description of the configuration of the second electrode plate 222 and the second electrode lead tabs 224 will be omitted.

Hereinafter, the first electrode plate and the first electrode lead tab will be described in more detail with reference to FIG. 3.

FIG. 3A is a view illustrating a configuration of the first electrode plate, and FIG. 3B is a view illustrating that the first electrode plate and the first electrode lead tabs are connected to each other.

First, the configuration of the first electrode plate 212 will be described with reference to FIG. 3A. As shown in FIG. 3A, the first electrode plate 212 includes a current collector 212a and an active layer 212b.

The current collector 212a is formed of a metal material and serves as a movement path of charges emitted from the active layer 212b or supplied to the active layer 212b. The current collector may be formed using a metal foil.

The active layer 212b is a portion in which electric energy is stored and may be formed of activated carbons on the current collector 212a made of a metal material. The active layer 212b may be coated on both sides of the current collector 212a.

In one embodiment, activated carbons produced using a steam activation method or an alkali activation method may be used for the active layer 212b so that an ultra capacitor has low-resistance. According to the embodiment, electrolyte cations and anions are moved by adsorbing/desorbing due to charging and discharging in activated carbon pores, thereby decreasing diffusion resistance of charges.

In this case, as the ratio of mesopores and macropores, which are pore sizes that decrease the diffusion resistance, becomes higher, relatively low-resistance may be exhibited. However, as the ratio of the mesopores and macropores becomes higher, the spaces in which electrolyte ions are absorbed/desorbed becomes smaller, which may cause a decrease in capacity.

Accordingly, activated carbon in which a ratio of the sum of mesoporous and macroporous specific surface area to the total specific surface area in pores of the activated carbon is 1.5% to 2.5% may be used for the active layer 212b according to the present invention to realize exhibition of low-resistance without capacity decrease.

Here, since nanoporous materials may be classified into microporous (less than 2 nm), mesoporous (2 to 50 nm), and macroporous (more than 50 nm) depending on a pore size, the ratio of the sum of the mesoporous and macroporous specific surface areas in the activated carbon pores may be measured by excluding the microporous ratio from the total specific surface area.

In one embodiment, when measuring the specific surface area, analysis of the ratio according to the pore size is performed by modeling by t-Plot (Harkins and Jura) method to calculate the ratio, and, based on the calculated ratio, the specific surface area ratio of micropore, mesopore, and macropore may be divided and calculated.

In one embodiment, the current collector 212a and the active layer 212b may be formed to have a thickness ratio satisfying the condition expressed by Equation 1 below.

[Equation 1]

$$4 \leq \frac{T_{ac}}{T_{cc}} \leq 9.7$$

In Equation 1, Tac denotes a thickness of the active layer 212b, and Tcc denotes a thickness of the current collector 212a.

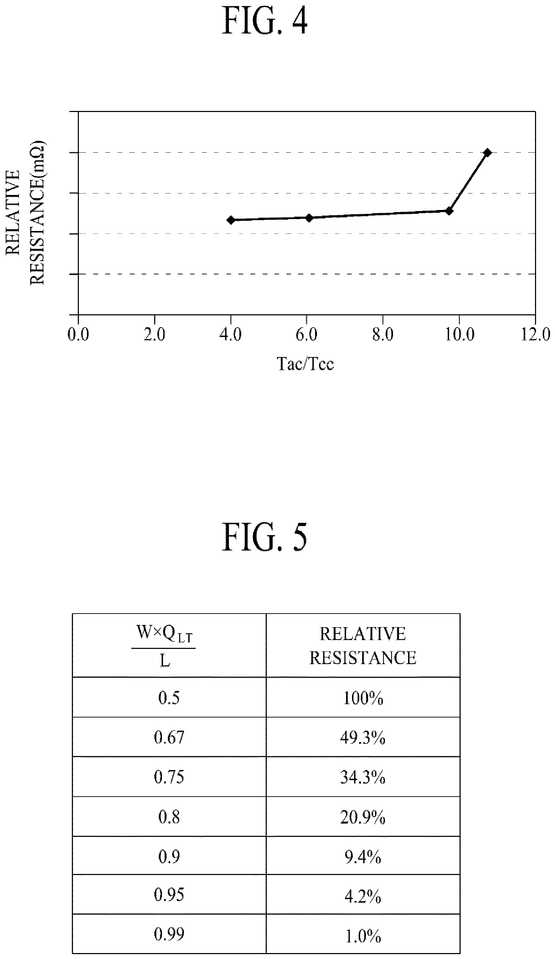

The reason for which the current collector 212a and the active layer 212b according to the present invention are formed to have the thickness ratio as shown in Equation 1 is that when the thickness ratio between the current collector 212a and the active layer 212b exceeds 9.7, as shown in FIG. 4, relative resistance changes rapidly so that low-resistance is difficult to achieve. Another reason is that when the thickness ratio of the current collector 212a and the active layer 212b is less than 4, the ratio of the active layer 212b may be reduced in the case in which the ultra capacitor is used repeatedly such that a capacity of the ultra capacitor may be reduced.

Further, the thickness range of the current collector 212a and the active layer 212b needs to be appropriately set even within the thickness ratio range satisfying Equation 1.

When the current collector 212a and the active layer 212b are too thick (when the density of the current collector 212a and the active layer 212b is low), contact efficiency between the activated carbons in the active layer 212b and the contact efficiency between the active layer 212b and the current collector 212a may be decreased, thereby increasing resistance of the ultra capacitor. In particular, when the current collector 212a and the active layer 212b are excessively thick, a bonding force between the activated carbons is difficult to maintain in an accelerated life test, thereby decreasing reliability of the ultra capacitor. Further, when the current collector 212a and the active layer 212b are thick, a movement path of electrons between the current collector 212a and the active layer 212b becomes long, thereby increasing internal resistance of the ultra capacitor.

On the contrary, when the current collector 212a and the active layer 212b are thin (when the density of the current collector 212a and the active layer is high), the contact efficiency between the activated carbons in the active layer 212b and the contact efficiency between the active layer 212b and the current collector 212a are increased, which may be advantageous in realizing the low-resistance of the ultra capacitor, but capacitance of the ultra capacitor may be reduced as the active layer 212b decreases.

Accordingly, the thickness range of the current collector 212a and the active layer 212b needs to be set appropriately in order to realize the low-resistance of the ultra capacitor and ensure an adequate capacitance. In one embodiment, the current collector 212a may be formed to have a thickness of 22 to 52 μm and the active layer 212b may be formed to have a thickness of 210 μm or less within the range defined by Equation 1.

Next, the first electrode lead tabs 214 connected to the first electrode plate 212 will be described with reference to FIG. 3B.

The first electrode lead tabs 214 are connected to the first electrode plate 212 and serve as a path for supplying power to the external load (not shown), to which power is supplied from the ultra capacitor. Here, the first electrode 210 according to the present invention may include a plurality of first electrode lead tabs 214 as shown in FIG. 3B to secure a flow path of current.

In one embodiment, the length of the first electrode plate 212, the number of the first electrode lead tabs 214, and the gap between the plurality of first electrode lead tabs 214 are determined according to Equation 2 below.

[Equation 2]

$$0.8 \leq \frac{W \times Q_{LT}}{L} < 1$$

In Equation 2, W denotes the gap between the plurality of first electrode lead tabs 214, $Q_{LT}$ denotes the number of the first electrode lead tabs 214, and L denotes the length of the first electrode plate 212.

As shown in FIG. 5, it may be seen that: when the value of a relational expression for the length of the first electrode plate 212, the number of the first electrode lead tabs 214, and the gap between the plurality of first electrode lead tabs 214 as described in Equation 2 (hereinafter referred to as a "relational expression") is 0.5, the relative resistance is 100% which is a very great value; when the value of the relational expression increases to 0.67, the relative resistance decreases to 49.3%; when the value of the relational expression increases to 0.75, the relative resistance decreases to 34.3%; when the value of the relational expression increases to 0.80, the relative resistance decreases to 20.9%; when the value of the relation is increased to 0.9, the relative resistance decreases to 9.4%; when the value of the relational expression increases to 0.05, the relative resistance decreases to 4.2%; and when the value of the relational expression increases to 0.99, the relative resistance decreases to 1.0%. That is, it may be seen that the relative resistance decreases as the value of the relational expression increases within a range of less than one.

In one embodiment, the first electrode lead tabs 214 may be integrally formed with the first electrode plate 212 and may be formed to protrude from one side of the first electrode plate 212 in a first direction.

In another embodiment, the first electrode lead tabs 214 may be formed through coupling on one surface of the first electrode plate 212 to protrude in the first direction from the one side of the first electrode plate 212. Here, the first electrode lead tab 214 may be coupled to the one surface of the first electrode plate 212 using laser welding or the like.

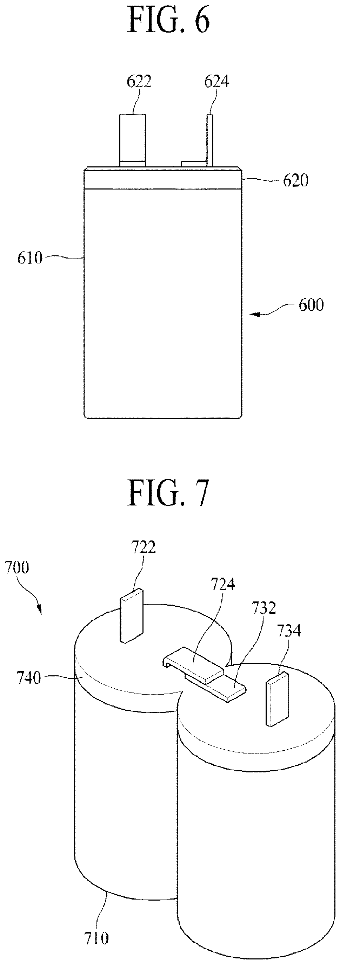

Hereinafter, an ultra capacitor, not part of the present invention, to which the bare cell described above with reference to Figure 2 is applied will be briefly described with reference to FIG. 6.

FIG. 6 is a view illustrating a configuration of the ultra capacitor to which the bare cell shown in FIG. 2 is applied.

As shown in FIG. 6, a low-resistance ultra capacitor 600 according to the present invention includes a housing 610, the bare cell (not shown), and a cover 620.

The housing 610 has a configuration in which one surface is closed and the other surface is opened to accommodate the bare cell 200 therein as shown in FIG. 2.

Here, the bare cell 200 is inserted into the housing 610 such that the first electrode lead tabs 214 and the second electrode lead tabs 224 of the bare cell 200 are exposed through the other surface of the housing 610.

In one embodiment, the housing 610 may be formed of a plastic material.

An electrolyte (not shown) for charging electric energy is immersed in the housing 610. In another embodiment, the bare cell 200 may be kept in a container filled with an electrolyte for a predetermined time so that the electrolyte can be immersed into the bare cell 200. In still another embodiment, an electrolyte may be coated on the first electrode 210 and the second electrode 220 of the bare cell 200.

The bare cell 200 is the same as that shown in FIG. 2, and the description of the bare cell 200 has already been described with reference to FIGS. 2 to 5, and thus a detailed description thereof will be omitted.

The cover 620 is coupled to the other surface of the housing 610 to close the other surface of the housing 610. The electrolyte in the housing 610 is prevented from flowing out to the outside due to the cover 620.

In one embodiment not part of the present invention, a first electrode terminal 622, which is configured to connect the first electrode lead tab 214 of the bare cell 200 to a first terminal (not shown) of an external load to which power is supplied from the ultra capacitor 600, and a second electrode terminal 624, which is configured to connect the second electrode lead tab 224 of the bare cell 200 to a second terminal (not shown) of the external load to which the power is supplied from the ultra capacitor 600, may be formed on the cover 620.

The cover 620 may be coupled to the housing 610 using a laser welding method or an ultrasonic welding method.

Meanwhile, although not shown, the low-resistance ultra capacitor 600 may further include a vent hole for discharging a pressure inside the low-resistance ultra capacitor 600 to the outside. A pressure adjusting device (for example, a vent valve, not shown) for adjusting the pressure inside the low-resistance ultra capacitor 600 is inserted into such the vent hole so that the pressure inside the low-resistance ultra capacitor 600 is adjusted. In one embodiment, the vent hole may be formed in the cover 620.

When an ultra capacitor module is configured by using the low-resistance ultra capacitor as shown in FIG. 6, a second electrode terminal of a first low-resistance ultra capacitor is connected to a first electrode terminal of a second low-resistance ultra capacitor by using a bus bar or the like. Here, a first electrode terminal of the first low-resistance ultra capacitor is connected to the first terminal of the external load, and a second electrode terminal of the second low-resistance ultra capacitor is connected to the second terminal of the external load.

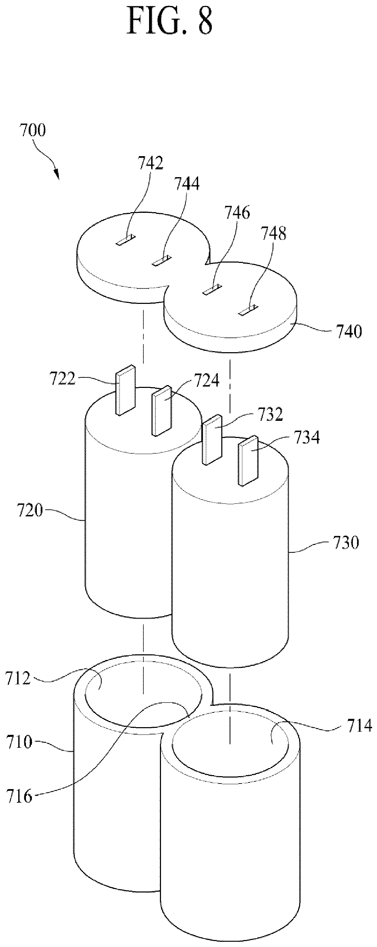

In another embodiment, a plurality of low-resistance ultra capacitors may be connected to each other without a separate bus bar coupling. Hereinafter, an ultra capacitor module connected without a bus bar coupling will be described in more detail with reference to FIGS. 7 and 8.

FIG. 7 is a perspective view of the ultra capacitor module connected without a bus bar coupling, and FIG. 8 is an exploded perspective view of the ultra capacitor module connected without a bus bar coupling.

For convenience of explanation, the ultra capacitor module configured using two bare cells is shown in FIGS. 7 and 8, but the ultra capacitor module may also be configured using three or more bare cells using a connection method shown in FIGS. 7 and 8.

As shown in FIGS. 7 and 8, an ultra capacitor module 700 includes a housing 710, a first bare cell 720, a second bare cell 730, and a cover 740.

The housing 710 has a configuration in which one surface is closed and the other surface is opened to accommodate the first bare cell 720 and the second bare cell 730 therein. To this end, a first accommodation hole 712 for accommodating the first bare cell 720, and a second accommodation hole 714 for accommodating the second bare cell 730, are formed in the housing 710, and the first accommodation hole 712 and the second accommodation hole 714 are separated by a partition wall 716.

When the first bare cell 720 and the second bare cell 730 are respectively inserted into the first accommodation hole 712 and the second accommodation hole 714, the first bare cell 720 and the second bare cell 730 are inserted into the first accommodation hole 712 and the second accommodation hole 714 so that a plurality of first electrode lead tabs 722 overlapping each other and a plurality of second electrode lead tabs 724 overlapping each other of the first bare cell 720 and a plurality of first electrode lead tabs 732 overlapping each other and a plurality of second electrode lead tabs 734 overlapping each other of the second bare cell 730 are exposed through the other surface of the housing 710.

In one embodiment, the housing 710 may be formed of a plastic material.

An electrolyte (not shown) for charging electric energy is immersed in the housing 710. In another embodiment, the first and second bare cells 720 and 730 may be kept in a container filled with an electrolyte for a predetermined time so that the electrolyte can be immersed into the first and second bare cells 720 and 730. In still another embodiment, an electrolyte may be coated on a first electrode (not shown) and a second electrode (not shown) of the first and second bare cells 720 and 730.

Since the first and second bare cells 720 and 730 are the same as that shown in FIG. 2, a detailed description thereof will be omitted.

The cover 740 is coupled to the other surface of the housing 710 to close the other surface of the housing 710. The electrolyte in the housing 710 is prevented from flowing out to the outside due to the cover 740.

A first groove 742 for exposing the plurality of first electrode lead tabs 722 overlapping each other of the first bare cell 720, a second groove 744 for exposing the plurality of second electrode lead tabs 724 overlapping each other of the first bare cell 720, a third groove 746 for exposing the plurality of first electrode lead tabs 732 overlapping each other of the second bare cell 730, and a fourth groove 748 for exposing the plurality of second electrode lead tabs 734 overlapping each other of the second bare cell 730 are formed in the cover 740 in each region corresponding to the first and second bare cells 720 and 730.

The plurality of first electrode lead tabs 722 overlapping each other of the first bare cell 720 is exposed to the outside through the first groove 742 and connected to a first terminal (not shown) of an external load.

The plurality of second electrode lead tabs 724 overlapping each other of the first bare cell 720, which is exposed through the second groove 744, and the plurality of first electrode lead tabs 732 overlapping each other of the second bare cell 730, which is exposed through the third groove 746, are electrically connected to each other. The plurality of second electrode lead tabs 724 overlapping each other of the first bare cell 720 and the plurality of first electrode lead tabs 732 overlapping each other of the second bare cell 730 may be coupled to each other using laser welding. Through this, the first bare cell 720 and the second bare cell 730 are connected in series with each other. Here, at least one of the plurality of second electrode lead tabs 724 overlapping each other of the first bare cell 720 and the plurality of first electrode lead tabs 732 overlapping each other of the second bare cell 730 may be bent, and the plurality of second electrode lead tabs 724 overlapping each other of the first bare cell 720 and the plurality of first electrode lead tabs 732 overlapping each other of the second bare cell 730 may be laser welded.

In one embodiment, when at least one of the plurality of second electrode lead tabs 724 overlapping each other of the first bare cell 720 and the plurality of first electrode lead tabs 732 overlapping each other of the second bare cell 730 is bent, each of the electrode lead tabs 724 and 732 may be bent so that at least some of the electrode lead tabs 724 and 732 overlap each other. According to the embodiment, there may be a region in which the electrode lead tabs 724 and 732 overlap each other after the electrode lead tabs 724 and 732 are welded.

In another embodiment, when each of the electrode lead tabs 724 and 732 is bent, the electrode lead tabs 724 and 732 may be bent so that the electrode lead tabs 724 and 723 do not overlap each other, that is, so that ends of the electrode lead tabs 724 and 732 are brought into contact with each other. Here, the embodiment in which the electrode lead tabs 724 and 732 are bent so that there is an overlapped region between the electrode lead tabs 724 and 732 between the above-described two embodiments is superior in terms of the convenience of work and contact reliability.

The plurality of second electrode lead tabs 734 overlapping each other of the second bare cell 730 is exposed to the outside through the fourth groove 748 and connected to a second terminal (not shown) of the external load.

As shown in FIGS. 7 and 8, when the ultra capacitor module is configured without a separate bus bar coupling, the first and second bare cells 720 and 730 may be directly inserted into the housing 710 without a separate casing, thereby preventing manufacturing cost from being increased due to a double casing (a casing and a housing of each bare cell) and reducing a weight of a product.

It should be understood by those skilled in the art that the present disclosure can be embodied in other specific forms without changing the technical concept and essential features of the present invention.

Therefore, the above-described embodiments should be understood to be exemplary and not limiting in every aspect. The scope of the present invention will be defined by the following claims rather than the above-detailed description, and all changes and modifications derived from the meaning and the scope of the claims and equivalents thereof should be understood as being included in the scope of the present invention.

**Claims**

1. A low-resistance ultra capacitor comprising a bare cell (200) including:

   a first electrode (210) including a first electrode plate (212) having a first polarity and a plurality of first electrode lead tabs (214) connected to the first electrode plate (212);
   a second electrode (220) including a second electrode plate (222) having a second polarity opposite to the first polarity and a plurality of second electrode lead tabs (224) connected to the second electrode plate (222); and
   at least one separator (230) disposed between the first electrode (210) and the second electrode (220) to electrically insulate the first electrode (210) and the second electrode (220),
   wherein the bare cell (200) is formed by winding the first electrode (210), the separator (230), and the second electrode (220) so that the plurality of first electrode lead tabs (214) overlap each other and the plurality of second electrode lead tabs (224) overlap each other, **characterized in that**,
   the length of the first electrode plate (212), the number of the first electrode lead tabs (214), and the gap between the first electrode lead tabs (214) or the length of the second electrode plate (222),
the number of the second electrode lead tabs (224), and the gap between the second electrode lead tabs (224) are determined according to an equation below,

$$0.8 \leq \frac{W \times Q_{LT}}{L} < 1$$

where, W is the gap between the first electrode lead tabs (214) or the second electrode lead tabs (224), $Q_{LT}$ is the number of the first electrode lead tabs (214) or the second electrode lead tabs (224), and L is the length of the first electrode plate (212) or the second electrode plate (222), wherein the low-resistance ultra capacitor comprises a first bare cell (720) and a second bare cell (730) as the bare cell (200), the low-resistance ultra capacitor further comprises:

   a housing (710) having a configuration in which one surface is closed and the other surface is opened and having a first accommodation hole (712) for accommodating the first bare cell (720) and a second accommodation hole (714) for accommodating the second bare cell (730);
   an electrolyte immersed in the housing (710); and
   a cover (740) configured to cover the other surface of the housing (710),
   wherein a first groove (742) for exposing a plurality of first electrode lead tabs (722) overlapping each other of the first bare cell (720), a second groove (744) for exposing a plurality of second electrode lead tabs (724) overlapping each other of the first bare cell (720), a third groove (746) for exposing a plurality of first electrode lead tabs (732) overlapping each other of the second bare cell (730), and a fourth groove (748) for exposing a plurality of second electrode lead tabs (734) overlapping each other of the second bare cell (730) are formed in the cover (740),
   wherein the plurality of first electrode lead tabs (722) of the first bare cell (720) are exposed to the outside through the first groove (742) and connected to a first terminal of an external load, the plurality of second electrode lead tabs (724) of the first bare cell (720) which are exposed through the second groove (744) and the plurality of the first electrode lead tabs (732) of the second bare cell (730) which are exposed through the third groove (746) are electrically connected to each other, and the plurality of second electrode lead tabs (734) of the second bare cell (730) are exposed to the outside through the fourth groove (748) and connected to a second terminal of the external load.

2. The low-resistance ultra capacitor of claim 1, wherein each of the first electrode plate (212) and the second electrode plate (222) includes:

   a current collector (212a); and
   an active layer (212b) formed on the current collector (212a),
   wherein the current collector (212a) and the active layer (212b) are formed so as to satisfy an equation below

$$4 \leq \frac{T_{ac}}{T_{cc}} \leq 9.7$$

   where, Tac is a thickness of the active layer (212b), and Tcc is a thickness of the current collector (212a).

3. The low-resistance ultra capacitor of claim 2, wherein the active layer (212b) includes activated carbon, and
   a ratio of the sum of mesoporous and macroporous specific surface areas to the total specific surface area in pores of the activated carbon is in a range of 1.5% to 2.5%.

4. The low-resistance ultra capacitor of claim 2, wherein the thickness of the current collector (212a) is in a range of 22 μm to 52 μm.

5. The low-resistance ultra capacitor of claim 2, wherein the thickness of the active layer (212b) is 210 μm or less.

6. The low-resistance ultra capacitor of claim 1,wherein:
   the plurality of second electrode lead tabs (724) of the first bare cell (720) and the plurality of first electrode lead tabs (732) of the second bare cell (730) are bent so that at least some of the plurality of second electrode lead tabs (724) and the plurality of first electrode lead tabs (732) overlap each other.

**Patentansprüche**

1. Ultrakondensator mit niedrigem Widerstand umfassend eine nackte Zelle (200) umfassend:

   eine erste Elektrode (210) umfassend eine erste Elektrodenplatte (212), die eine erste Polarität aufweist, und eine Vielzahl von ersten Elektrodenleitertabs (214), die mit der ersten Elektrodenplatte (212) verbunden sind;
   eine zweite Elektrode (220) umfassend eine zweite Elektrodenplatte (222), die eine zu der ersten Polarität entgegengesetzte zweite Polarität aufweist, und eine Vielzahl von zweiten Elektrodenleitertabs (224), die mit der zweiten Elektrodenplatte (222) verbunden sind; und
   wenigstens einen Separator (230), der zwischen der ersten Elektrode (210) und der zweiten Elektrode (220) angeordnet ist, um die erste Elektrode (210) und die zweite Elektrode (220) elektrisch zu isolieren,
   wobei die nackte Zelle (200) durch Wickeln der ersten Elektrode (210), des Separators (230) und der zweiten Elektrode (220) gebildet wird, so dass die Vielzahl von ersten Elektrodenleitertabs (214) einander überlappen und die Vielzahl von zweiten Elektrodenleitertabs (224) einander überlappen, **dadurch gekennzeichnet, dass**
   die Länge der ersten Elektrodenplatte (212), die Anzahl der ersten Elektrodenleitertabs (214) und die Lücke zwischen den ersten Elektrodenleitertabs (214) oder die Länge der zweiten Elektrodenplatte (222), die Anzahl der zweiten Elektrodenleitertabs (224) und die Lücke zwischen den zweiten Elektrodenleitertabs (224) gemäß einer nachstehenden Gleichung bestimmt werden,

$$0.8 \leq \frac{W \times Q_{LT}}{L} < 1$$

   wobei W die Lücke zwischen den ersten Elektrodenleitertabs (214) oder den zweiten Elektrodenleitertabs (224) ist, $Q_{LT}$ die Anzahl der ersten Elektrodenleitertabs (214) oder der zweiten Elektrodenleitertabs (224) ist, und L die Länge der ersten Elektrodenplatte (212) oder der zweiten Elektrodenplatte (222) ist,
   wobei der Ultrakondensator mit niedrigem Widerstand eine erste nackte Zelle (720) und eine zweite nackte Zelle (730) als die nackte Zelle (200) umfasst,
   der Ultrakondensator mit niedrigem Widerstand ferner umfasst:

ein Gehäuse (710), das eine Konfiguration aufweist, in der eine Oberfläche geschlossen ist und die andere Oberfläche geöffnet ist, und ein erstes Aufnahmeloch (712) zum Aufnehmen der ersten nackten Zelle (720) und ein zweites Aufnahmeloch (714) zum Aufnehmen der zweiten nackte Zelle (730) aufweist;

einen Elektrolyten, der in dem Gehäuse (710) eingetaucht ist; und

eine Abdeckung (740), die dazu konfiguriert ist, die andere Oberfläche des Gehäuses abzudecken (710),

wobei eine erste Nut (742) zum Exponieren einer Vielzahl von einander überlappenden ersten Elektrodenleitertabs (722) der ersten nackten Zelle (720), eine zweite Nut (744) zum Exponieren einer Vielzahl von einander überlappenden zweiten Elektrodenleitertabs (724) der ersten nackten Zelle (720), eine dritte Nut (746) zum Exponieren einer Vielzahl von einander überlappenden ersten Elektrodenleitertabs (732) der zweiten nackten Zelle (730) und eine vierte Nut (748) zum Exponieren einer Vielzahl von einander überlappenden zweiten Elektrodenleitertabs (734) der zweiten nackten Zelle (730) in der Abdeckung (740) gebildet sind,

wobei die Vielzahl von ersten Elektrodenleitertabs (722) der ersten nackten Zelle (720) durch die erste Nut (742) zu der Außenseite exponiert und mit einem ersten Anschluss einer externen Last verbunden sind, die Vielzahl von zweiten Elektrodenleitertabs (724) der ersten nackten Zelle (720), die durch die zweite Nut (744) exponiert sind, und die Vielzahl der ersten Elektrodenleitertabs (732) der zweiten nackten Zelle (730), die durch die dritte Nut (746) exponiert sind, miteinander elektrisch verbunden sind, und die Vielzahl von zweiten Elektrodenleitertabs (734) der zweiten nackten Zelle (730) durch die vierte Nut (748) zu der Außenseite exponiert und mit einem zweiten Anschluss der externen Last verbunden sind.

**2.** Ultrakondensator mit niedrigem Widerstand nach Anspruch 1, wobei jede der ersten Elektrodenplatte (212) und der zweiten Elektrodenplatte (222) umfasst:

einen Stromkollektor (212a); und
eine aktive Schicht (212b), die an dem Stromkollektor (212a) gebildet ist,
wobei der Stromkollektor (212a) und die aktive Schicht (212b) gebildet sind, um eine nachstehende Gleichung zu erfüllen

$$4 \leq \frac{T_{ac}}{T_{cc}} \leq 9.7$$

wobei $T_{ac}$ eine Dicke der aktiven Schicht (212b) ist, und $T_{cc}$ eine Dicke des Stromkollektors (212a) ist.

**3.** Ultrakondensator mit niedrigem Widerstand nach Anspruch 2, wobei die aktive Schicht (212b) aktivierten Kohlenstoff umfasst, und
ein Verhältnis der Summe von mesoporösen und makroporösen spezifischen Oberflächenbereichen zu dem gesamten spezifischen Oberflächenbereich in Poren des aktivierten Kohlenstoffs in einem Bereich von 1,5 % bis 2,5 % ist.

**4.** Ultrakondensator mit niedrigem Widerstand nach Anspruch 2, wobei die Dicke des Stromkollektors (212a) in einem Bereich von 22 $\mu$m bis 52 $\mu$m ist.

**5.** Ultrakondensator mit niedrigem Widerstand nach Anspruch 2, wobei die Dicke der aktiven Schicht (212b) 210 $\mu$m oder weniger ist.

**6.** Ultrakondensator mit niedrigem Widerstand nach Anspruch 1, wobei:
die Vielzahl von zweiten Elektrodenleitertabs (724) der ersten nackten Zelle (720) und die Vielzahl von ersten Elektrodenleitertabs (732) der zweiten nackten Zelle (730) gebogen sind, so dass wenigstens einige der Vielzahl von zweiten Elektrodenleitertabs (724) und der Vielzahl von ersten Elektrodenleitertabs (732) einander überlappen.

**Revendications**

**1.** Un supercondensateur à faible résistance comprenant une cellule nue (200) comprenant :

une première électrode (210) comprenant une plaque (212) de première électrode ayant une première polarité et une pluralité de languettes conductrices (214) de première électrode connectées à la plaque (212) de première électrode ;
une deuxième électrode (220) comprenant une plaque (222) de deuxième électrode ayant une deuxième polarité opposée à la première polarité et une pluralité de languettes conductrices (224) de deuxième électrode connectées à la plaque (222) de deuxième électrode ; et
au moins un séparateur (230) disposé entre la première électrode (210) et la deuxième électrode (220) pour isoler électriquement la première électrode (210) et la deuxième électrode (220),

la cellule nue (200) étant formée en enroulant la première électrode (210), le séparateur (230) et la deuxième électrode (220) de sorte que les languettes de la pluralité de languettes conductrices (214) de première électrode se chevauchent les unes les autres et que les languettes de la pluralité de languettes conductrices (224) de deuxième électrode se chevauchent les unes les autres, **caractérisé en ce que**,

la longueur de la plaque (212) de première électrode, le nombre de languettes conductrices (214) de première électrode et l'espace entre les languettes conductrices (214) de première électrode ou la longueur de la plaque (222) de deuxième électrode, le nombre des languettes conductrices (224) de deuxième électrode et l'espace entre les languettes conductrices (224) de deuxième électrode sont déterminés selon une équation ci-dessous,

$$0.8 \leq \frac{W \times Q_{LT}}{L} < 1$$

dans laquelle W est l'espace entre les languettes conductrices (214) de première électrode ou les languettes conductrices (224) de deuxième électrode, $Q_{LT}$ est le nombre de languettes conductrices (214) de première électrode ou de languettes conductrices (224) de deuxième électrode, et L est la longueur de la plaque (212) de première électrode ou de la plaque (222) de deuxième électrode,

le supercondensateur à faible résistance comprenant une première cellule nue (720) et une deuxième cellule nue (730) en tant que ladite cellule nue (200),

le supercondensateur à faible résistance comprenant en outre :

un logement (710) ayant une configuration dans laquelle une surface est fermée et l'autre surface est ouverte et ayant un premier trou de logement (712) pour loger la première cellule nue (720) et un deuxième trou de logement (714) pour loger la deuxième cellule nue (730) ;
un électrolyte immergé dans le logement (710) ; et
un couvercle (740) configuré pour recouvrir l'autre surface du boîtier (710),
une première rainure (742) pour exposer une pluralité de languettes conductrices (722) de première électrode de la première cellule nue (720) se chevauchant mutuellement, une deuxième rainure (744) pour exposer une pluralité de languettes conductrices (724) de deuxième électrode de la première cellule nue (720) se chevauchant mutuellement, une troisième rainure (746) pour exposer une pluralité de languettes conductrices (732) de première électrode de la deuxième cellule nue (730) se chevauchant mutuellement, et une quatrième rainure (748) pour exposer une pluralité de languettes conductrices (734) de deuxième électrode de la deuxième cellule nue (730) se chevauchant mutuellement, sont formées dans le couvercle (740),

les languettes de la pluralité de languettes conductrices (722) de première électrode de la première cellule nue (720) étant exposées à l'extérieur à travers la première rainure (742) et connectées à une première borne d'une charge externe, les languettes de la pluralité de languettes conductrices (724) de deuxième électrode de la première cellule nue (720) qui sont exposées à travers la deuxième rainure (744) et les languettes de la pluralité des languettes conductrices (732) de première électrode de la deuxième cellule nue (730) qui sont exposées à travers la troisième rainure (746) étant connectées électriquement les unes aux autres, et les languettes de la pluralité de languettes conductrices (734) de deuxième électrode de la deuxième cellule nue (730) étant exposées à l'extérieur à travers la quatrième rainure (748) et connectées à une deuxième borne de la charge externe.

2. Le supercondensateur à faible résistance selon la revendication 1, dans lequel chacune parmi la plaque (212) de première électrode et la plaque (222) de deuxième électrode comprend :

un collecteur de courant (212a) ; et
une couche active (212b) formée sur le collecteur de courant (212a),
le collecteur de courant (212a) et la couche active (212b) étant formés de manière à satisfaire une équation ci-dessous

$$4 \leq \frac{T_{ac}}{T_{cc}} \leq 9.7$$

dans laquelle Tac est une épaisseur de la couche active (212b), et Tcc est une épaisseur du collecteur de courant (212a).

**3.** Le supercondensateur à faible résistance selon la revendication 2, dans lequel la couche active (212b) comprend du charbon actif, et
un rapport de la somme des surfaces spécifiques mésoporeuses et macroporeuses à la surface spécifique totale dans les pores du charbon actif est dans une gamme allant de 1,5 % à 2,5 %.

**4.** Le supercondensateur à faible résistance selon la revendication 2, dans lequel l'épaisseur du collecteur de courant (212a) est dans une gamme allant de 22 μm à 52 μm.

**5.** Le supercondensateur à faible résistance selon la revendication 2, dans lequel l'épaisseur de la couche active (212b) est de 210 μm ou moins.

**6.** Le supercondensateur à faible résistance selon la revendication 1, dans lequel :
les languettes de la pluralité de languettes conductrices (724) de deuxième électrode de la première cellule nue (720) et les languettes de la pluralité de languettes conductrices (732) de première électrode de la deuxième cellule nue (730) sont courbées de sorte qu'au moins certaines des languettes de la pluralité de languettes conductrices (724) de deuxième électrode et des languettes de la pluralité de languettes conductrices (732) de première électrode se chevauchent mutuellement.

# FIG. 1

# FIG. 2

# FIG. 3A

# FIG. 3B

# FIG. 4

# FIG. 5

| $\dfrac{W \times Q_{LT}}{L}$ | RELATIVE RESISTANCE |
|---|---|
| 0.5 | 100% |
| 0.67 | 49.3% |
| 0.75 | 34.3% |
| 0.8 | 20.9% |
| 0.9 | 9.4% |
| 0.95 | 4.2% |
| 0.99 | 1.0% |

# FIG. 6

# FIG. 7

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2736057 A1

- JP 2008091585 A